# EUROPÄISCHE PATENTANMELDUNG

(11) **EP 4 671 568 A1**
(43) Veröffentlichungstag der Anmeldung: **31.12.2025**
(21) Anmeldenummer: 24185412.4
(22) Anmeldetag: 28.06.2024
(51) Int. Cl.: F16H 25/22

(54) **KUGELGEWINDETRIEB MIT INNENUMLENKUNG, VERWENDUNG DESSELBEN UND VERFAHREN ZUR VORMONTAGE EINES KUGELGEWINDETRIEBES**

(71) Anmelder: SFS Group International AG, 9435 Heerbrugg (CH)
(72) Erfinder: Sinz, Daniel, 6921 Kennelbach (AT); Hanselmann, Jasmine, 9450 Altstätten (CH); Zach, Marijo, 9443 Widnau (CH); Spirig, Sebastian, 9443 Widnau (CH)

(57) **Zusammenfassung**

Ein Kugelgewindetrieb umfasst eine Gewindespindel (300), eine Spindelmutter (200) und eine Vielzahl von Kugeln (400), die im Zwischenraum zwischen Gewindespindel und Spindelmutter in einem helixförmigen Kugelkanal umlaufen. Zwei, in den Kugelkanal eingreifende Kugelumlenkungen (510, 520) und ein zwischen diesen verlaufender Überleitkanal (530) bilden zusammen mit einem Abschnitt des Kugelkanals einen geschlossenen Umlaufpfad für die Kugeln. Die hier verwendete Kugelrückführung ist als Innenumlenkung ausgeführt. Die Gewindespindel weist zumindest abschnittsweise einen radial aussen liegenden Hohlzylinder mit einer zentralsymmetrischen inneren Kavität (360) und einen diese Kavität füllenden zylindrischen Kern (310) auf, wobei der zylindrische Kern der Gewindespindel aus einer ersten und einer zweiten Kernhälfte (330, 350) zusammengesetzt ist. Der Überleitkanal ist in der gemeinsamen Trennfläche (370) der beiden Kernhälften angeordnet. Kennzeichnend hierbei ist, dass die beiden Kernhälften als Schräghälften ausgeführt sind, deren gemeinsame Trennfläche eine Ebene bildet, die die Zentralachse (450) des Kerns nur in einem Punkt schneidet.

## Beschreibung

Die vorliegende Erfindung betrifft einen Kugelgewindetrieb mit einer spezifisch ausgestalteten Gewindespindel mit Innenumlenkung und die Anwendung eines solchen Kugelgewindetriebes.

### TECHNISCHER HINTERGRUND

Als Kugelumlaufspindel oder auch Kugelgewindetrieb wird üblicherweise ein Wälzschraubtrieb mit Kugeln als Wälzkörpern bezeichnet. Zu den Hauptbestandteilen eines Kugelgewindetriebs zählen eine Gewindespindel und eine diese Spindel umgreifende Spindelmutter. Zwischen diesen beiden Bauteilen laufen im Betrieb Kugeln um. Die Gewindezüge der Gewindespindel wie auch der Spindelmutter sind als Kugelrillen mit einem geeigneten Profil ausgebildet und komplementär so aufeinander abgestimmt, dass sie im montierten Zustand zwischen sich einen Kugelkanal bzw. eine Kugelführung bilden. Anders als bei einer Schraube-Mutter-Verbindung, bei der die Gewindeflanken flächig aufeinander gleiten, übernehmen beim Kugelgewindetrieb die umlaufenden Kugeln im Gewinde die Lastübertragung zwischen Mutter und Spindel. Die flächige Gleitbewegung wird also durch eine Rollbewegung ersetzt, was mit verringerter Reibung einhergeht.

Um einen geschlossenen Umlaufpfad für die Kugeln zu erhalten, werden Kugelrückführungen eingesetzt. Diese setzen sich zusammen aus zwei Kugelumlenkungen und einem dazwischenliegenden Überleitkanal. Die Kugelumlenkungen haben die Aufgabe, die Kugeln an einer ersten Stelle aus dem Kugelkanal zwischen Spindelmutter und Gewindespindel herauszuheben und an einer zweiten Stelle wieder zuzuführen. Eine Kugelrückführung stellt also als Ganzes einen Bypass dar, der eine oder mehrere Gewindezüge des Mutter-Spindelsystems überbrückt und so einen geschlossenen Umlaufpfad für die Kugeln eines Kugelgewindetriebes bildet. In der Regel werden die Kugeln in der Spindelmutter radial nach aussen aus der Kugelrille ausgehoben und innerhalb oder ausserhalb der Spindelmutter in einem Kanal oder einem Rohr (dem Überleitkanal) geführt (Aussenumlenkung), bevor sie an der dafür vorgesehenen Stelle wieder in den Kugelkanal zwischen Gewindespindel und Spindelmutter eingesetzt werden.

Bekannt sind aber auch Kugelgewindetriebe mit Innenumlenkung, bei denen die Kugeln ebenfalls an einer ersten Stelle aus der Kugelführung zwischen Spindelmutter und Gewindespindel entnommen und an einer zweiten Stelle wieder rückgeführt werden. Statt nach radial aussen in die Spindelmutter werden die Kugeln jedoch radial nach innen in die Gewindespindel geführt und dort umgelenkt.

In beiden Fällen müssen die Kräfte, die beim Ausheben der Kugeln aus der Kugelführung frei werden, von der Kugelumlenkung aufgenommen bzw. abgeleitet werden.

Technisch gesehen arbeitet ein Kugelgewindetrieb als Schraubgetriebe, welches eine Drehbewegung in eine Längsbewegung umsetzen kann bzw. umgekehrt. Dabei wird die Unter- bzw. Übersetzung durch die Dimensionierung der Gewindespindel und die Steigung des Gewindes bestimmt.

Kugelgewindetriebe werden in vielen technischen Anwendungen eingesetzt, wo eine Längsbewegung mit einem Elektromotor und nicht über einen hydraulisch oder pneumatisch betriebenen Zylinder erreicht werden soll. Zunehmend spielen Kugelgewindetriebe eine Rolle in elektromechanischen und elektro-hydraulischen Bremssystemen, wo Kugelgewindetriebe als Ersatz für hydraulische betätigte Bremszylinder oder parallel zu bekannten Bremssystemen bei Bremsassistenzsystemen eingesetzt werden. Dort helfen sie die Bremskraft eines Fahrers zu verstärken bzw. als Teil eines Sicherheitssystems einen (Not-)Bremsvorgang einzuleiten oder zu unterstützen. Auch rein elektrisch betriebene Bremssysteme mit Kugelgewindetrieben als Bremszylinderersatz an jedem Rad werden damit möglich.

Es ist ein grundsätzliches Problem bei Kugelgewindetrieben, dass die Kugelrückführungen, besonders bei einer Aussenumlenkung, den Aussendurchmesser und damit das Volumen des Bauteils vergrössern. Ausserdem erschwert ein aussen auf der (meist zylindrischen) Spindelmutter angebrachter Überleitkanal häufig die kompakte Integration in ein Antriebssystem. Zwar gibt es Kugelgewindetriebe, deren Überleitkanäle versenkt in der Zylinderwandung der Spindelmutter untergebracht werden konnten; diese Auslegung erfordern aber auch eine entsprechende Wandstärke der Spindelmutter, was nicht immer möglich oder erwünscht ist.

### STAND DER TECHNIK

Kugelgewindetriebe mit Innenumlenkung sind bereits in den 1960ern näher beschrieben worden, beispielsweise in der US 3,333,484.

Eine weitere Schrift aus dem Stand der Technik ist die DE 27 41 333. Hier lenkt eine Kugelrückführung die Kugeln so um, dass sie radial in einen zylindrischen Kern innerhalb der Gewindespindel umgelenkt, in der Mittelebene des Kerns geführt und radial wieder nach aussen geführt werden. Dadurch ergibt sich ein S-förmiger oder U-förmiger Überleitkanal. Wenn der Kern aus zwei Halbschalen ausgeführt wird, kann der Überleitkanal in der Trennebene der Halbschalen geführt werden.

Die DE 10 2015 109 159 A1 zeigt einen Kugelgewindetrieb, dessen Gewindespindel eine axiale Bohrung aufweist und zwei schlitzförmige Ausnehmungen, die an zwei definierten Punkten am Gewinde der Gewindespindel eingebracht werden und die bis zum Längskanal der zentralen Bohrung reichen. Die beiden schlitzförmigen Ausnehmungen sind zur Aufnahme von Kugelumlenkungen vorgesehen, die die Kugeln aus dem Kugelkanal radial nach innen in den axialen Überleitkanal umlenken bzw. aus ihm in den Kugelkanal zurückleiten.

In der DE 10 2016 013 356 wird eine Innenumlenkung gezeigt, deren Umlenkkanal nicht in, sondern parallel zur Zentralachse verläuft. Die Gewindespindel ist zweiteilig ausgelegt mit einem radial aussenliegenden, rohrförmigen Teil und einem radial innenliegenden Kern, der den zylindrischen Innenraum des Hohlzylinders ausfüllt. Der Überleitkanal ist dabei im Kern angeordnet.

Der Anmeldung liegt die Aufgabe zugrunde, das Prinzip der Innenumlenkung weiterzuentwickeln in Bezug auf Anwendungssicherheit und Montagefreundlichkeit.

Diese Aufgabe wird mit den Merkmalen des unabhängigen Anspruches gelöst. Vorteilhafte Ausführungsformen der Erfindung sind in den abhängigen Ansprüchen angegeben.

### DARSTELLUNG DER ERFINDUNG

Ein Kugelgewindetrieb in generischer Auslegung analog dem oben angeführten Stand der Technik umfasst eine Gewindespindel und eine Spindelmutter, die die Gewindespindel koaxial zumindest teilweise umschliesst. Im Zwischenraum zwischen Gewindespindel und Spindelmutter laufen eine Vielzahl von Kugeln in einem helixförmigen Kugelkanal um. Dieser Kugelkanal wird aus zwei einander zugewandten Laufbahnen gebildet, wobei eine Laufbahn an der Innenseite der Spindelmutter und die andere an der Aussenseite der Gewindespindel angeordnet sind. Ein Kugelgewindetrieb kann eine oder mehrere Kugelrückführungen umfassen. Eine solche Kugelrückführung weist zwei, in den Kugelkanal eingreifende Kugelumlenkungen und einen zwischen diesen verlaufenden Überleitkanal auf. Zusammen mit einem Abschnitt des Kugelkanals wird so ein geschlossener Umlaufpfad für die Kugeln gebildet. Solchermassen ausgeführte Kugelrückführungen überbrücken dabei stets mehr als eine Windung des helixförmigen Kugelkanals.

In der vorliegenden Erfindung ist die Kugelrückführung als Innenumlenkung ausgeführt mit einem zur Zentralachse hin orientierten Überleitkanal. "Zur Zentralachse hin" bedeutet, dass der Überleitkanal grundsätzlich innerhalb der Gewindespindel verläuft und ist nicht so auszulegen, dass er nur unmittelbar im Bereich zwischen Kugelumlenkung(en) und Zentralachse angeordnet werden darf.

Die Gewindespindel umfasst zumindest abschnittsweise einen radial aussen liegenden Hohlzylinder mit einer zentralsymmetrischen inneren Kavität und einen diese Kavität füllenden zylindrischen Kern. "Zumindest abschnittsweise radial aussen liegender Hohlzylinder" ist so zu verstehen, dass die Gewindespindel sowohl die Grundform einer beidseitig offenen Hülse haben darf wie auch die eines nur an einer Stirnseite offenen Hohlzylinders. Mit Kavität ist folglich der Innenraum des Hohlzylinders gemeint und mit Kern ein in diese Kavität einzusetzendes zylindrisches Bauteil.

Dieser zylindrische Kern der Gewindespindel ist dabei aus einer ersten und einer zweiten Kernhälfte zusammengesetzt ist. Der besagte Überleitkanal zwischen den Kugelumlenkungen ist in der gemeinsamen Trennfläche der beiden Kernhälften angeordnet.

Erfindungsgemäss werden die beiden Kernhälften als Schräghälften ausgeführt. Mit "schräg" ist gemeint, dass die Trennfläche den Kern im Wesentlichen diagonal durchschneidet. Mathematisch ausgedrückt, definiert die gemeinsame Trennfläche eine Ebene, die die Zentralachse des Kerns nur an einem Punkt schneidet. Insbesondere liegt die Zentralachse der Gewindespindel nicht in der Trennfläche, sondern schneidet sie an einem und nur an einem Punkt.

Durch die gewählte Auslegung wird erreicht, dass die Richtung der Ableitung der Kugeln aus dem Kugelkanal in den Überleitkanal überwiegend als Sekante (in der Trennfläche) ausgebildet ist. Damit ist gemeint, dass die initiale Richtung der Kugeln unmittelbar nach der Umlenkung nach innen nicht radial auf die Zentralachse zuläuft, sondem einer Sekante folgt, sprich von der Ableitstelle weg und an der Zentralachse vorbei. Diese Sekante geht, technisch bedingt, über in einen bogenförmigen Verlauf in Richtung der zweiten Kugelumlenkung. Der Überleitkanal wie auch die Kugelumlenkungen selbst werden bevorzugt symmetrisch ausgelegt, damit die bei der Kugelaus- bzw. einleitung auftretenden Kräfte unabhängig von der Drehrichtung des Kugelgewindetriebs werden.

Bei einem Kugelgewindetrieb der hier beschriebenen Bauweise wird der Hohlzylinder der Gewindespindel Durchbrüche aufweisen an jenen Stellen, wo die Positionen der Kugelumlenkungen vorgesehen sind. Dem Fachmann geläufig werden die Durchbrüche so angelegt, dass sie genau in einen Kugelkanal zwischen Gewindespindel und Spindelmutter münden. An genau diesen Stellen können die Kugeln aus dem Kugelkanal entnommen bzw. rückgespeist werden.

Der Überleitkanal wird durch den vorbeschriebenen Aufbau des Kerns also bevorzugt aus zwei halbschaligen Laufbahnen aufgebaut sein und so je eine rinnenförmige Hälfte des Überleitkanals bilden. Die halbschaligen Laufbahnen liegen in den Oberflächen der beiden Kernhälften, die der Trennfläche zugewandt sind und ergänzen sich im zusammengefügten Zustand zum Überleitkanal. Am technisch einfachsten lässt sich dieser Aufbau dadurch realisieren, dass der Kern bzw. die beiden Kernhälften aus spritzgiessfähigem Kunststoff gefertigt werden. Mit "spritzgiessfähig" sind alle Kunststoffe bzw. Kunststoffe mit Zuschlägen wie Fasern gemeint, die in Spritzgiessmaschinen verarbeitet werden können.

Um die ordnungsgemässe, relative Lage der Kernhälften zueinander sicherzustellen, können die an die Trennfläche angrenzenden Oberflächen der Kernhälften Zentrierhilfen aufweisen, welche im verbauten Zustand komplementär ineinandergreifen. Bevorzugt werden die Zentrierhilfen dabei als formschlüssig ineinandergreifende Strukturelemente in Form von Noppen / Vertiefungen, Nuten / Rillen ausgelegt. Die Ausführung als der Zentrierhilfen als Rast- bzw. Klemmelemente ist ebenfalls möglich.

In einer bevorzugten Ausführung werden die Kugelumlenkungen in einem Trägerelement angeordnet. Damit wird eine spätere Einzelmontage der Kugelumlenkungen vermieden. Die Kugelumlenkungen werden mindestens zwei zungenförmige Schaufeln und zwei Durchlassöffnungen im (bzw. durch) das Trägerelement umfassen.

Das Trägerelement weist dabei im Wesentlichen, sprich ohne Berücksichtigung der Kugelumlenkungen, die Grundform einer Zylinderschale auf. Es entspricht dann im Aussehen einem dünnen, gekrümmten Bauteil, wobei die Krümmung der radial aussenliegenden Oberfläche des Trägerelements der Krümmung der radial inneren Oberfläche des Hohlzylinders der Gewindespindel so weit entspricht bzw. gleichkommt, dass die besagten Oberflächen flächig aneinander angelegt werden können. Bevorzugt wird das Trägerelement aus Metall gefertigt, z.B. aus einem Metallblech geschnitten, gestanzt und gebogen. Die Grösse wird so gewählt, dass es einerseits einfach in der Montage und kostengünstig in der Herstellung ist. Weitere Parameter werden aus dem folgenden Kontext bzw. den Zeichnungen deutlich. Das Trägerelement darf auch Ausnehmungen aufweisen, die zur Gewichts- und Materialersparnis vorgesehen werden, ohne die Funktion zu beeinträchtigen oder die erfinderische Idee zu verlassen.

Die zylindrische Oberfläche der kombinierten Kernhälften wird - komplementär zum Trägerelement - eine Ausnehmung aufweisen, die das Trägerelement so aufnehmen kann, dass das Trägerelement die Mantelfläche des Kerns - zumindest in den Bereichen, wo das Trägerelement auf der Ausnehmung bzw. Vertiefung aufliegt, wieder zu einer regulären äusseren Zylinderfläche ergänzt. Es sei angemerkt, dass der Kern bzw. die Kernhälften Ausnehmungen aufweisen dürfen, wie sie üblicherweise vorgesehen werden, um Material und Gewicht einzusparen. So kann der Kern auch gerippt ausgeführt werden, so dass sich die zylindrische Oberfläche virtuell aus der Einhüllenden der gewichtsoptimierten Form des Kerns ergibt.

Die Kugelumlenkungen, die am Trägerelement angeordnet sind, werden als zungenförmigen Schaufeln ausgeführt und sind daher gewölbt. Sie weisen vom Trägerelement weg bzw. ragen von der gekrümmten Fläche ab. Die Wölbung ist so ausgeführt, dass eine Schaufel jeweils eine Durchlassöffnung im bzw. durch das Trägerelement zumindest teilweise überwölbt.

Die zungenförmigen Schaufeln werden im verbauten Zustand im Kugelgewindetrieb von den Durchbrüchen im Hohlzylinder der Gewindespindel aufgenommen. Sie sind so dimensioniert, dass sie in den Kugelkanal zwischen Spindelmutter und Gewindespindel ragen und so die Kugeln aus dem Kugelkanal durch die Durchlassöffnungen des Trägerelements in den Überleitkanal leiten bzw. umgekehrt.

Kugelgewindetriebe der hier beschriebenen Art können einzeln oder in Mehrzahl als Betätigungselement in einem Bremskraftverstärkersystem oder als Betätigungselement in einer Radbremse Verwendung finden, z.B. bei Fahrzeugen und Flugzeugen. Die Anwendung direkt auf einem Bremssattel erlaubt die Konstruktion vollelektrischer Bremssysteme unter Verzicht auf Hydraulik.

Die Verwendung ist jedoch nicht darauf beschränkt. Solche Kugelgewindetriebe können in ein oder Mehrzahl auch als Betätigungselement in der gerichteten Nachführung eines Solarpanels, eines Teleskops, einer Nachverfolgungseinrichtung bzw. einer Hebe- oder Nivelliervorrichtung Verwendung finden.

Die hier beschriebene Bauart eines Kugelgewindetriebes hat seine Vorteile, wenn ein Kugelgewindetreib mit grossem Durchmesser für grosse Betätigungslasten realisiert werden soll. Einerseits wird durch die Verwendung einer Innenumlenkung der Aussendurchmesser des Systems klein gehalten, weil der Überleitkanal für die Kugeln nicht innerhalb oder aufgesetzt auf der Spindelmutter realisiert werden muss. Andererseits kann der Innendurchmesser des eingesetzten Kerns dazu genutzt werden, den Überleitkanal in einem grossen Radius zwischen den Kugelumlenkungen auszuführen, was den (Roll-)Widerstand der Kugeln in dem Bereich verringern hilft.

Ein Verfahren zur Vormontage eines Kugelgewindetriebes lässt sich mit folgenden Schritten beschrieben:
- Bereitstellen einer Gewindespindel, eines Trägerelementes und einer ersten und zweiten Kernhälfte.
- Einlegen des Trägerelementes in die Kavität der Gewindespindel, wobei
- die gewölbten zungenförmigen Schaufeln in die Durchbrüche im Hohlzylinder der Gewindespindel eingeführt werden und
- die radial aussenliegende Oberfläche der Trägerelements an die radial innere Oberfläche des Hohlzylinders der Gewindespindel flächig angelegt wird.
- Die erste und die zweite Kernhälfte werden zum Kern zusammengefügt.
- Der Kern wird so in die Kavität eingeschoben, dass die Durchlassöffnungen im Trägerelement und der Überleitkanal im Kern einen geschlossenen Pfad bilden.
- Der Kern wird in der Endlage durch Verstemmen, Verschweissen, Verschrauben oder durch Verwendung einer Halterung fixiert.

Diese Verfahrensschritte beziehen sich auf die Vor-Montageabfolge der Kernelemente eines Kugelgewindetriebes in einer bevorzugten Ausführungsform. Die Befüllung mit Kugeln ist nicht beschrieben ebenso wenig der Zusammenbau von Gewindespindel und Spindelmutter sowie weiterer nötiger Bauelemente.

In dieser Offenbarung wird durchgängig von Kugeln als den üblichsten in einem Kugelgewindetrieb eingesetzten Wälzkörpern gesprochen. Die beschriebenen Prinzipien lassen sich jedoch auch auf andere Wälzkörper bzw. Bauformen übertragen.

Die Erfindung wird nun mit Bezug auf die begleitenden Zeichnungen anhand besonders bevorzugter Ausführungsformen beispielhaft erläutert.

### KURZBEZEICHNUNG DER FIGUREN

Figur 1 zeigt einen Querschnitt durch einen Kugelgewindetrieb 100 gemäss dem Stand der Technik.
Figur 2 zeigt eine Gewindespindel 300 in schräger Draufsicht.
Figuren 3 A und B zeigen die getrennten Schräghälften 330, 350 eines Kerns.
Figur 4 zeigt die zum Kern 310 zusammengesetzten Schräghälften 330, 350.
Figur 5 zeigt ein Trägerelement 540.
Figur 6 zeigt die Zusammenstellung von Trägerelement und Kern 310.
Figur 7 zeigt eine Zusammenstellung einer Gewindespindel 300 mit eingesetztem Trägerelement 540.
Figur 8 zeigt die Zusammenstellung einer einzelnen Schräghälfte 330 mit einem Trägerelement 540.
Figur 9 zeigt eine Zusammenstellung einer einzelnen Schräghälfte 330 mit einem Trägerelement 540 in einer Gewindespindel 200.

### BESCHREIBUNG DER FIGUREN

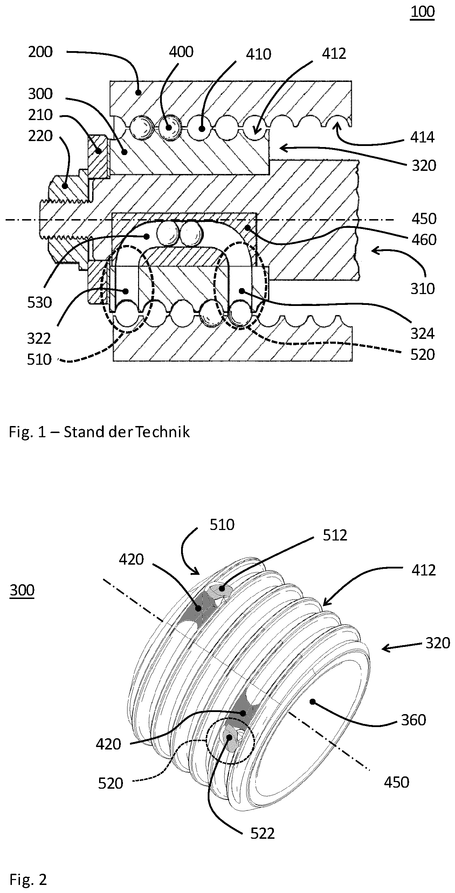

Figur 1 zeigt einen Kugelgewindetrieb 100 mit Innenumlenkung (beispielhaft) im Schnitt, in einem Grundaufbau gemäss dem Stand der Technik. Die drei Grundelemente sind, von radial aussen nach innen zur Zentralachse 450 hin: die Spindelmutter 200, die Gewindespindel 300 und der Kern 310. Die aussenliegende Gewindespindel 200 trägt auf ihrer hohlzylindrischen Innenseite eine helixförmige Laufbahn 414 für Kugeln 400. Steigung und Abmessungen der Laufbahn sind komplementär zur Laufbahn 412 auf der zylindrischen Aussenseite der Gewindespindel 300 ausgelegt, so dass die Kugeln 400 in dem definierten Zwischenraum zwischen Gewindespindel 300 und Spindelmutter 200 umlaufen können. Die gegenüberstehenden, komplementären Laufbahnen 412 und 414 bilden einen helixförmigen Kugelkanal 410. Die Gewindespindel 300 ist hier als Hohlzylinder 320 ausgebildet, die durch einen Kern 310 gefüllt ist. In der gezeigten Ausführung weist der Kern 310 eine Stufe auf, wobei der im Durchmesser kleinere Durchmesser so gewählt ist, dass er zum Innendurchmesser des Hohlzylinders 320 passt. Im gezeigten Beispiel wird der Hohlzylinder 320 mittels einer Scheibe 210 und eine Verschraubung 220 fixiert.

Der geschlossene Umlaufpfad für die Kugeln 400 wird durch die beiden Kugelumlenkungen 510, 520 und den verbindenden Überleitkanal 530 sichergestellt. Zwei Durchbrüche 322 und 324 im Hohlzylinder 320 sorgen für den Zutritt vom Kugelkanal 410 nach innen in den Überleitkanal 530. Dieser ist in Richtung auf die Zentralachse 450 des Kugelgewindetriebs 100 angeordnet, hier realisiert in einem separaten Einsatzelement 460 im Kren 310.

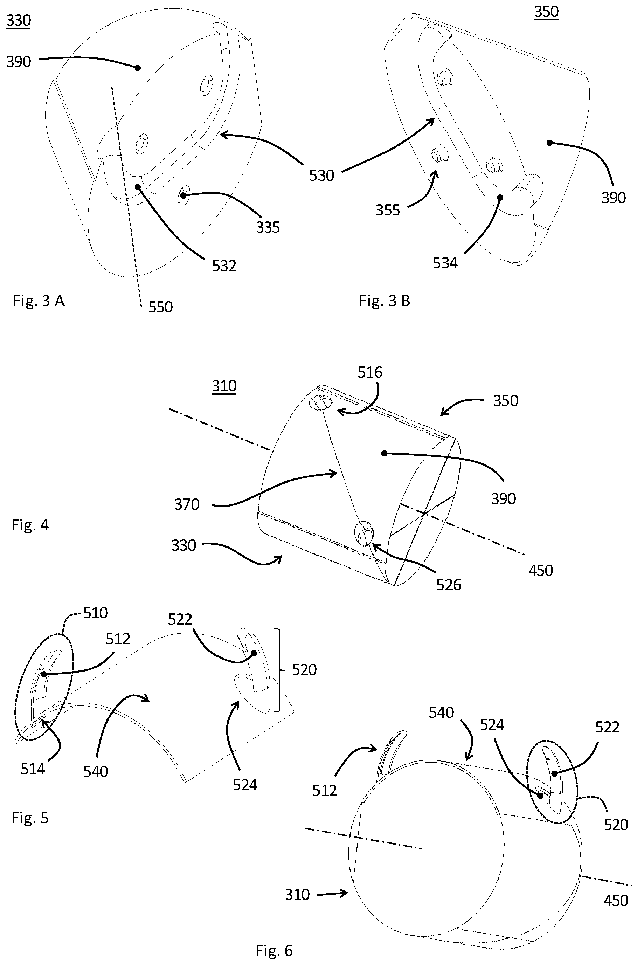

Figur 2 zeigt eine Ausführungsform eine Gewindespindel 300 in einer für die Erfindung möglichen Ausführung als Hohlzylinder 320. Ein Kern, wie in Figur 1 dargestellt, ist weggelassen. Mit Referenz 360 ist die Kavität markiert. Die Zentralachse 450 ist in üblicher Weise dargestellt. Die spiralförmige Laufbahn der Kugeln 412 ist auf der Aussenseite der Gewindespindel erkennbar, ebenso zwei Kugelumlenkungen 510 und 520. In der gezeigten Perspektive sichtbar sind die beiden zungenförmigen Schaufeln 512 und 522, die Teile des hier nicht weiter sichtbaren Trägerelements 540 (Fig. 5, 6) sind. Sie überragen die Durchbrüche im Hohlzylinder 320. Hier speziell sind sie durch Ein- bzw. Auslauframpen 420 in der Laufbahn 412 ergänzt. Dadurch werden die Kugeln, bevor sie aus dem Kugelkanal 410 in die Kugelumlenkung 510 bzw. 520 ausgelenkt werden, entlastet und gleiten so leichter in die Kugelumlenkung.

Die Figuren 3A und 3B zeigen zwei Schräghälften 330 bzw. 350 einzeln und Figur 4 die beiden Schräghälften zusammengefügt zu einem Kern 310. Figuren 3A und B zeigen, dass der Überleitkanal 530 je zur Hälfte in der Schnittebene bzw. Trennfläche 370 der Schräghälften 330, 350 als halbschalige Laufbahnen 532, 534 angelegt sind. Zusammengefügt als Kern 310 (Fig. 4) sind die Ein- bzw. Auslässe 516, 526 sichtbar, die genau in der Trennfläche 370 liegen. Die Zentralachse 450 durch den Kern 310 ist wiederum als Strich-Punkt-Linie dargestellt.

Figuren 3A und B zeigen auch exemplarisch die Zentrierhilfen 335 und 355, die helfen, die beiden Schräghälften 330 und 350 in korrekter Lage zueinander zu orientieren. In Figur 3A, B und 4 ist ebenfalls die Ausnehmung 390 gezeigt, die für das Trägerelement 540 vorgesehen ist (Figur 5). Referenzzeichen 550 zeigt die Ausrichtung des ersten Segmentes der Überleitkanals 530. Aus Sicht der Kugeln ist der Umlenkwinkel aus der Laufbahn 412 (Fig. 2) in den Überleitkanal 532 grösser als 90°, weil die gestrichelte Linie 550 eine Sekante bildet. Würde die Linie 550 die Zentralachse 450 schneiden, wäre die Umlenkung überwiegend radial ausgerichtet und der Umlenkwinkel etwa 90°. Wäre der erste Abschnitt des Überleitkanals 530 flach angelegt, wäre der Umlenkwinkel weniger als 90°.

Figur 5 zeigt ein Trägerelement 540 in einer Ausführung für zwei Kugelumlenkungen. Gut sichtbar ist die Grundform des Trägerelements 540 als Zylinderschale. Das hier gezeigte dünne, gekrümmte Bauteil ist aus einer ursprünglich rechteckigen Grundform gebildet worden, was aber lediglich eine bevorzugte Ausführungsform und keine zwingende Auslegung darstellt. Die Wölbung bzw. Krümmung der Zylinderschale ist einerseits so gewählt, dass das Trägerelement 540 in die Ausnehmung 390 der beiden zum Kern 310 zusammengefügten Schnitthälften 330, 350 eingefügt werden kann. Dadurch wird die Ausnehmung 390 so ausgefüllt, dass der Kern 310 zusammen mit dem Trägerelement 540 eine Zylinderoberfläche aufweist (ohne Berücksichtigung der zungenförmigen Schaufeln 512, 522). Diese Ausführung ergänzt die Festlegung, dass die Krümmung der radial aussenliegenden Oberfläche des Trägerelements 540 der Krümmung der radial inneren Oberfläche des Hohlzylinders 320 der Gewindespindel 300 so angeglichen ist, dass die besagten Oberflächen flächig aneinander angelegt werden können.

Figur 5 zeigt weiterhin, wie die beiden Kugelumlenkungen 510 und 520 am Trägerelement realisiert sind. Sie umfassen jeweils eine Durchlassöffnung 514, 524 im Trägerelement und zungenförmige Schaufeln 512 und 522, die die jeweils zugeordnete Durchlassöffnung 514, 524 überwölben.

Figur 6 kann als Zusammenstellung der Bauteile von Figur 4 und 5 gesehen werden. Es wird gezeigt, wie ein Kern 310 zusammengesetzt aus den Schräghälften 330, 350 ergänzt um ein Trägerelement 540 in einer Ausführungsform gemäss Erfindung aussehen kann.

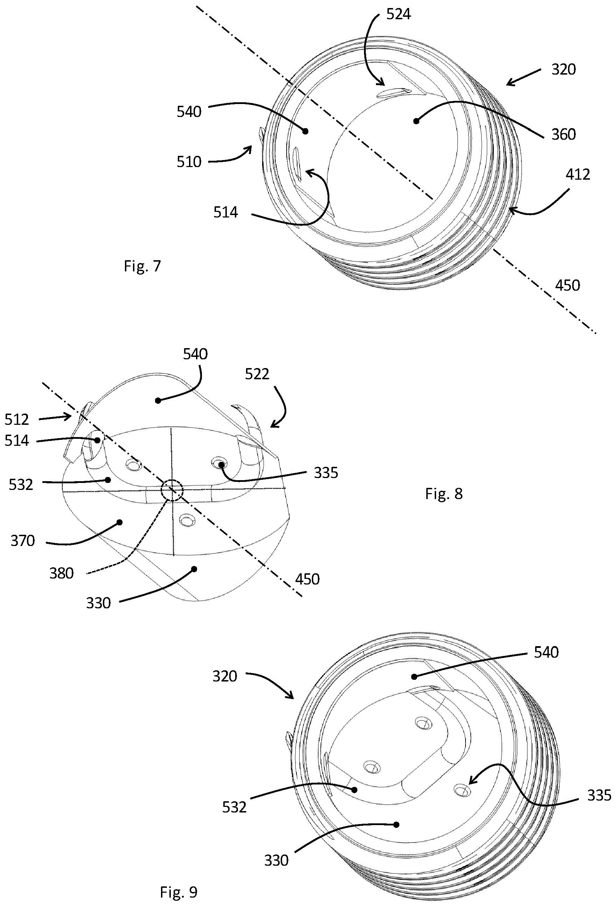

Figur 7 zeigt in einer Schrägansicht den Hohlzylinder 320 einer Spindelmutter 200 mit eingelegtem Trägerelement 540. Die Zentralachse 450 zeigt die Orientierung der Gewindespindel; 412 bezeichnet die Laufbahn der Kugeln. Durch den schrägen Blickwinkel in die Kavität 360 wird deutlich, wie die Krümmung des Trägerelements 540 an den Innenradius des Hohlzylinders 320 angepasst ist. Von der Kugelumlenkung 510 ist die Spitze der zungenförmigen Schaufel erkennbar (nicht referenziert). Die beiden Durchlassöffnungen 514, 524 durch das Trägerelement 540 markieren die Lage der Kugelumlenkungen.

Figur 8 zeigt eine Zusammenstellung der ersten Kernhälfte 330 mit einem Trägerelement 540. Die halbschalige Laufbahn 532 ist in der Trennfläche 370 / schrägen Schnittfläche der Kernhälfte 330 gezeigt. Durch das Anlegen des Trägerelementes 540 an die Kernhälfte 330 ist gewährleistet, dass die halbschalige Laufbahn 532 mit der Durchlassöffnung (nur 514 gezeigt) fluchtet. Von den Kugelumlenkungen sind noch die zungenförmigen Schaufeln 512, 522 gezeigt bzw. angedeutet. Figur 8 zeigt insbesondere das Merkmal, dass die Zentralachse 450 die Trennfläche 370 bzw. Ebene zwischen zwei Schräghälften nur in einem Punkt 380 schneidet. Von den Zentrierhilfen 335 ist nur eine markiert.

Figur 9 ist eine Zusammenstellung von Hohlzylinder 320, einem Trägerelement 540 und einer Kernhälfte 330 bzw. Schräghälfte. Alle genannten Bauteile sind korrekt so ausgerichtet, dass die Kugelumlenkung durchgängig ist, wie anhand der Lage der halbschaligen Laufbahn 532. Markiert ist eine Zentrierhilfe 335.

Anzumerken ist bei Figur 9, dass der gezeigte Zustand nicht einen Zwischenschritt des Montageverfahrens zeigt.

## Patentansprüche

1. Kugelgewindetrieb (100) umfassend:
- eine Gewindespindel (300) und
- eine Spindelmutter (200), die die Gewindespindel (300) koaxial zumindest teilweise umschliesst;
- einer Vielzahl von Kugeln (400), die im Zwischenraum zwischen Gewindespindel (300) und Spindelmutter (200) in einem helixförmigen Kugelkanal (410) umlaufen; wobei dieser Kugelkanal (410) aus zwei einander zugewandten Laufbahnen (412, 414) besteht, die an der Innenseite der Spindelmutter (200) und der Aussenseite der Gewindespindel (300) angeordnet sind;
- mindestens eine Kugelrückführung mit zwei, in den Kugelkanal (410) eingreifenden Kugelumlenkungen (510, 520) und einem zwischen diesen verlaufenden Überleitkanal (530), die zusammen mit einem Abschnitt des Kugelkanals (410) einen geschlossenen Umlaufpfad für die Kugeln (400) bilden;
- wobei die Kugelrückführung als Innenumlenkung ausgeführt ist mit einem zur Zentralachse (450) hin orientierten Überleitkanal (530);
- wobei die Gewindespindel (300) zumindest abschnittsweise einen radial aussen liegenden Hohlzylinder (320) mit einer zentralsymmetrischen inneren Kavität (360) und einen diese Kavität (360) füllenden zylindrischen Kern (310) umfasst, wobei
- der zylindrische Kern (310) der Gewindespindel (300) aus einer ersten und einer zweiten Kernhälfte (330, 350) zusammengesetzt ist; und
- der Überleitkanal (530) in der gemeinsamen Trennfläche (370) der beiden Kernhälften (330, 350) angeordnet ist
**dadurch gekennzeichnet, dass**
- die beiden Kernhälften (330, 350) als Schräghälften ausgeführt sind, deren gemeinsame Trennfläche (370) eine Ebene bildet, die die Zentralachse (450) des Kerns nur in einem Punkt (380) schneidet.

2. Kugelgewindetrieb (100) nach Anspruch 1, **dadurch gekennzeichnet, dass** die Richtung der Ableitung der Kugeln (400) aus dem Kugelkanal (410) in den Überleitkanal (530) überwiegend als Sekante (550) ausgebildet ist.

3. Kugelgewindetrieb (100) nach Anspruch 1 und 2, **dadurch gekennzeichnet, dass** der Hohlzylinder (320) der Gewindespindel (300) Durchbrüche (322, 324) aufweist an jenen Stellen, wo die Positionen der Kugelumlenkungen (510, 520) vorgesehen sind.

4. Kugelgewindetrieb (100) nach Anspruch 1 bis 3, **dadurch gekennzeichnet, dass** der Überleitkanal (530) aus zwei halbschaligen Laufbahnen (532, 534) aufgebaut ist.

5. Kugelgewindetrieb (100) nach Anspruch 1 bis 4, **dadurch gekennzeichnet, dass** der Kern (310) bzw. die beiden Kernhälften (330, 350) aus spritzgiessfähigem Kunststoff gefertigt sind.

6. Kugelgewindetrieb (100) nach Anspruch 1 bis 5, **dadurch gekennzeichnet, dass** die an die Trennfläche (370) angrenzenden Oberflächen der Kernhälften (330, 350) Zentrierhilfen (335, 355) aufweisen, welche im verbauten Zustand komplementär ineinandergreifen und die relative Lage der Kernhälften (330, 350) zueinander sicherstellen.

7. Kugelgewindetrieb (100) nach Anspruch 1 bis 6, **dadurch gekennzeichnet, dass** die Kugelumlenkungen (510, 520) in einem Trägerelement (540) angeordnet sind und mindestens zwei zungenförmigen Schaufeln (512, 522) und zwei Durchlassöffnungen (514, 524) im Trägerelement (540) umfassen.

8. Kugelgewindetrieb (100) nach Anspruch 7, **dadurch gekennzeichnet, dass** das Trägerelement (540) im Wesentlichen die Grundform einer Zylinderschale aufweist, wobei die Krümmung der radial aussenliegenden Oberfläche des Trägerelements (540) der Krümmung der radial inneren Oberfläche des Hohlzylinders (320) der Gewindespindel (300) so weit entspricht bzw. gleichkommt, dass die besagten Oberflächen flächig aneinander angelegt werden können.

9. Kugelgewindetrieb (100) nach Anspruch 7-8, **dadurch gekennzeichnet, dass** die zylindrische Oberfläche der kombinierten Kernhälften (330, 350) eine Ausnehmung (390) aufweist, die das Trägerelement (540) so aufnehmen kann, dass das Trägerelement (540) die Mantelfläche des Kerns (310) wieder zu einer regulären äusseren Zylinderfläche ergänzt.

10. Kugelgewindetrieb (100) nach Anspruch 7-9, **dadurch gekennzeichnet, dass** die zungenförmigen Schaufeln (512, 522) der Kugelumlenkungen (510, 520) gewölbt sind, vom Trägerelement (540) weg weisen und jeweils eine Durchlassöffnung (514, 524) durch das Trägerelement (540) zumindest teilweise überwölben.

11. Kugelgewindetrieb (100) nach Anspruch 10, **dadurch gekennzeichnet, dass** die Durchbrüche (322, 324) im Hohlzylinder (320) der Gewindespindel (300) im verbauten Zustand die zungenförmigen Schaufeln (512, 522) aufnehmen.

12. Kugelgewindetrieb (100) nach Anspruch 10-11, **dadurch gekennzeichnet, dass** im montierten Zustand die zungenförmigen Schaufeln (512, 522) in den Kugelkanal (410) ragen und einen Umlenkpfad für Kugeln (400) aus dem Kugelkanal (410) durch die Durchlassöffnungen (514, 524) des Trägerelements (540) in den Umleitkanal (530) bzw. umgekehrt bilden.

13. Kugelgewindetrieb (100) nach Anspruch 6, **dadurch gekennzeichnet, dass** die Zentrierhilfen (335, 355) als formschlüssig ineinandergreifende Strukturelemente in Form von Noppen / Vertiefungen, Nuten / Rillen ausgelegt sind.

14. Kugelgewindetrieb (100) nach Anspruch 13, **dadurch gekennzeichnet, dass** die Zentrierhilfen (335, 355) als Rast- bzw. Klemmelemente ausgelegt sind.

15. Verwendung eines oder einer Mehrzahl von Kugelgewindetrieben nach Anspruch 1-14 als Betätigungselement in einem Bremskraftverstärkersystem oder als Betätigungselement in einer Radbremse.

16. Verwendung eines oder einer Mehrzahl von Kugelgewindetrieben nach Anspruch 1-14 als Betätigungselement in der gerichteten Nachführung eines Solarpanels, eines Teleskops, einer Nachverfolgungseinrichtung, einer Hebe- oder Nivelliervorrichtung.

17. Verfahren zur teilweisen Montage bzw. Vormontage eines Kugelgewindetriebes (100) nach Anspruch 7-14, mit folgenden Schritten:
- Bereitstellen einer Gewindespindel (300), eines Trägerelementes (540) und einer ersten und zweiten Kernhälfte (330, 350)
- Einlegen des Trägerelementes (540) in die Kavität (360), wobei
- Die gewölbten zungenförmigen Schaufeln (512, 522) in die Durchbrüche (322, 324) im Hohlzylinder (320) der Gewindespindel (300) eingeführt werden und
- die radial aussenliegende Oberfläche der Trägerelements (540) an die radial innere Oberfläche des Hohlzylinders (320) der Gewindespindel (300) flächig angelegt wird,
- Zusammenfügen der ersten und zweiten Kernhälfte (330, 350) zum Kern (310)
- Einschieben des Kerns in die Kavität dergestalt, dass die Durchlassöffnungen (514, 524) im Trägerelement (540) und der Überleitkanal im Kern (310) einen geschlossenen Pfad bilden
- Fixieren des Kerns (310) in der Endlage durch Verstemmen, Verschweissen, Verschrauben oder Verwendung einer Halterung
